# EUROPEAN PATENT SPECIFICATION

(11) **EP 3 633 179 B1**
(45) Date of publication and mention of the grant of the patent: **28.04.2021**
(21) Application number: 18465581.9
(22) Date of filing: 01.10.2018
(51) Int. Cl.: F02M 26/26, F02M 26/67, F02M 26/69, F02M 26/71, F16K 1/00, F16K 11/00

(54) **SYSTEM FOR THE RECIRCULATION OF EXHAUST GAS IN A VEHICLE**
SYSTEM ZUR ABGASRÜCKFÜHRUNG IN EINEM FAHRZEUG
SYSTÈME DE RECIRCULATION DES GAZ D'ÉCHAPPEMENT DANS UN VÉHICULE

(43) Date of publication of application: 08.04.2020
(73) Proprietor: Vitesco Technologies GmbH, 30165 Hannover (DE)
(72) Inventor: Petca, Eduard Cornel, 300693 Timisoara (RO)

(56) References cited:
- EP-A2- 1 378 655
- DE-A1- 19 942 329
- FR-A1- 2 827 011

## Description

The present invention relates to a system for the recirculation of exhaust gas in a vehicle.

To optimise the combustion process in an internal combustion engine, and EGR-system recirculates a portion of an engine's exhaust gas back to the engine cylinders. This dilutes the oxygen in the intake air and provides gases inert to combustion to act as absorbents of combustion heat to reduce peak temperatures. Consequently, the emission of nitrogen oxides is reduced in gasoline and diesel engines.

To control the amount of recirculated exhaust gas, EGR-valves are used. Hence, the amount of recirculated gas can be adjusted with high precision to the current load point and operating mode of the engine.

Bypass valves are used to conduct the current of exhaust gas along several possible flow paths to the engine. In particular, the exhaust gas can be led directly to the engine or it can be guided through a cooler to reduce the exhaust gas temperature.

Sometimes, valves with one inlet and two outlets are used which employ at least one poppet valve body to block the first outlet and/or the second outlet. Sometimes, dual poppet valves are used which comprise a first valve body adapted for blocking and unblocking a first gas outlet and a second valve body adapted for blocking or unblocking a second gas outlet. Such a valve is disclosed in FR 2 827 011 A1, where one of the valve bodies is acted upon by a valve spring

Another EGR-valve is disclosed in EP 1378655 A2.

If both valve bodies are fixed to the same shaft, tight tolerances are required to ensure that both valve bodies fit their respective valve seats. Furthermore, the assembly of such a valve is complex and time-consuming, because the valve bodies are welded to the shaft outside the valve and need to be tested and readjusted ("mated") after the assembly.

It is an object of the present invention to provide a valve for controlling gas flow, for example in an EGR-system, which is easy to assemble and does not require tight tolerances. Furthermore, it is an object of the present invention to provide an economic and robust system for the recirculation of exhaust gas in a vehicle.

This object is achieved by means of the system according to claim 1. Advantageous embodiments and developments are objects of the dependent claims.

According to a first aspect of the invention, a system for the recirculation of exhaust gas in a vehicle is provided, comprising at least one inlet pipe, at least one first outlet pipe and one second outlet pipe, wherein the first outlet pipe is part of an exhaust gas cooling system, while the second outlet pipe bypasses the exhaust gas cooling system. Alternatively, the second outlet pipe may be part of an exhaust gas cooling system, while the first outlet pipe bypasses the exhaust gas cooling system.

Furthermore, the system comprises a valve for controlling gas flow, comprising at least one gas inlet in communication with the inlet pipe, at least one first gas outlet in communication with the first outlet pipe and one second gas outlet in communication with the second outlet pipe. Furthermore, the valve comprises a valve device adapted for blocking or unblocking the first gas outlet and/or the second gas outlet, the valve device comprising an axially movable shaft, a first valve body and a second valve body. The first valve body is adapted for blocking or unblocking the first gas outlet by interacting with a first valve seat of the first gas outlet, the first valve body being fixedly coupled to the shaft. The second valve body is adapted for blocking or unblocking the second gas outlet by interacting with a second valve seat of the second gas outlet, the second valve body being slidingly arranged on the shaft.

Furthermore, the valve comprises an actuator to move the shaft in an axial direction to open or close the valve. Typical EGR valve actuators include solenoids, torque motors, stepper motors, and DC motors.

The valve has the advantage that a distance between the two valve bodies on the shaft does not need to be exactly equal to a distance between the two valve seats, because the second valve body is not fixedly coupled to the shaft. Hence, it is possible to enlarge the tolerances for the individual elements of the valve, because tolerances may be compensated by the second valve body not being fixedly connected to the shaft. Furthermore, the necessity to test the assembled valve and to readjust (mate) the valve bodies is eliminated.

The second valve body has a first side facing towards the second valve seat and a second side facing towards the first valve body, wherein the retainer is fixed to the shaft on the first side of the second valve body to limit a sliding movement of the second valve body.

The retainer has the role of limiting a sliding movement of the second valve body. Furthermore, the shaft is able to take the second valve body with it when moving in an axial direction by way of the retainer engaging the second valve body.

According to the invention, a spring is arranged between the first valve body and the second valve body, the spring being adapted to exert a force on the second side of the second valve body to press the second valve body towards the retainer, when the first valve body is moved axially towards the second valve body.

Hence, the position of the second valve body on the shaft is limited by the retainer on one side and the spring on the other side. The force exerted by the spring on the second side together with a gas pressure also acting on the second side of the second valve body biases the second valve body towards the second valve seat and also towards the retainer. At the same time, the elastic spring allows the second valve body to adjust its position according to the actual design and position of the valve seat.

A first end of the spring is supported by the first valve body and a second end of the spring is supported by a collar, the collar being slidingly arranged on the shaft.

This has the advantage, that the spring, which can be a coil spring arranged coaxially with the shaft, can easily exert a force on the second valve body via the collar.

The collar forms part of a bushing, wherein the second valve body is arranged on a sleeve part of the bushing.

According to this embodiment, the second valve body has a central opening large enough for the sleeve part to be threaded through. The sleeve part of the bushing is arranged coaxially with the shaft and slidingly on the shaft.

The separate bushing has the advantage, that different materials can be used for the bushing and the second valve body. While the second valve body should be sufficiently stiff and durable, the bushing should be able to slide particularly easily on the shaft, thereby reducing wear of the components. Alternatively, it is possible to thread the shaft directly through a central opening of the valve body.

The collar can be a part of the bushing extending in radial direction outwards and being in contact with a second side of the first valve body. The bushing may be press-fitted into a central opening of the second valve body.

According to an embodiment of the invention, a distance D between the retainer and the first valve body is larger than a distance D₀ between the first valve body and the second valve body in a closed position of the valve.

This has the advantage, that in a closed position of the valve, the second valve body is not in contact with the retainer, but pressed to the second valve seat by the force of the spring. Hence, the valve device adjusts to the position of the valve seat and tight tolerances are not required.

The first valve body and the second valve body may for example be poppets.

Further advantages, advantageous embodiments and developments of the invention will become apparent from the exemplary embodiments which are described below in association with the schematic figures.
- Figure 1: shows a valve for controlling gas flow according to an embodiment of the invention in a closed position;
- Figure 2: shows a valve for controlling gas flow according to an embodiment of the invention in an open position;
- Figure 3: shows details of the valve according to figure 2 and
- Figure 4: shows details of the valve according to figure 1.

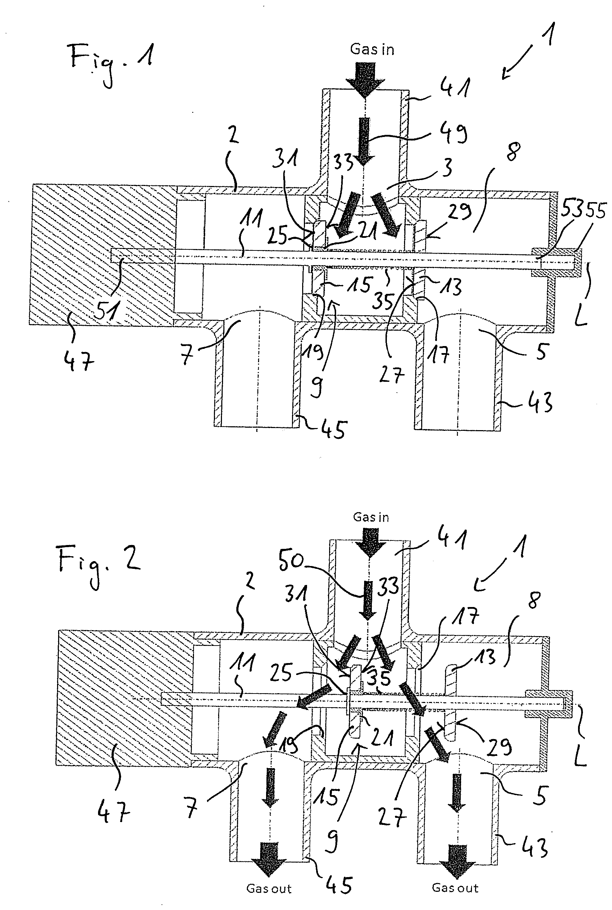

Figure 1 shows a valve 1 for controlling gas flow, for example an EGR-valve. The valve 1 has a housing 2 with at least one gas inlet 3, one first gas outlet 5 and one second gas outlet 7. The gas inlet 3 is in communication with an inlet pipe 41, for example a pipe of the exhaust tract. The first gas outlet 5 is in communication with a first outlet pipe 43, the second gas outlet 7 is in communication with a second outlet pipe 5.

The valve 1 comprises a valve device 9 which controls gas flow from the gas inlet 3 to the first gas outlet 5 and/or the second gas outlet 7. The gas flow is indicated by arrows 49 in figure 1 and by arrows 50 in figure 2.

The valve device 9 is arranged in a cavity 8 and comprises a shaft 11, which is axially movable in the cavity 8. The shaft 11 has a first end 51, which is supported by an actuator 47, and a second end 53, which is supported by a bearing 55. The shaft 11 has a longitudinal axis L which is in this embodiment identical with a longitudinal axis of the cavity 8.

The valve device 9 further comprises a first valve body 13, which is fixedly connected to the shaft 11, for example by welding. The first valve body 13 interacts with a first valve seat 17 to block or unblock communication between the gas inlet 3 and the first gas outlet 5. By displacing the shaft 11 through the actuator 47, the first valve body 13 can be moved away from the valve seat 17 to unblock communication between the gas inlet 3 and the first gas outlet 5. To block the communication between the gas inlet 3 and the first gas outlet 5, the shaft 11 is displaced to move the first valve body 13 towards the first valve seat 17. As the first valve body 13 is fixedly connected to the shaft 11, displacement of the shaft 11 causes equivalent displacement of the first valve body 13.

The valve device 9 further comprises a second valve body 15, which interacts with a second valve seat 19 to block or unblock communication between the gas inlet 3 and the second gas outlet 7. The second valve body 15 is not fixedly connected to the shaft 11, but slidingly arranged on the shaft 11.

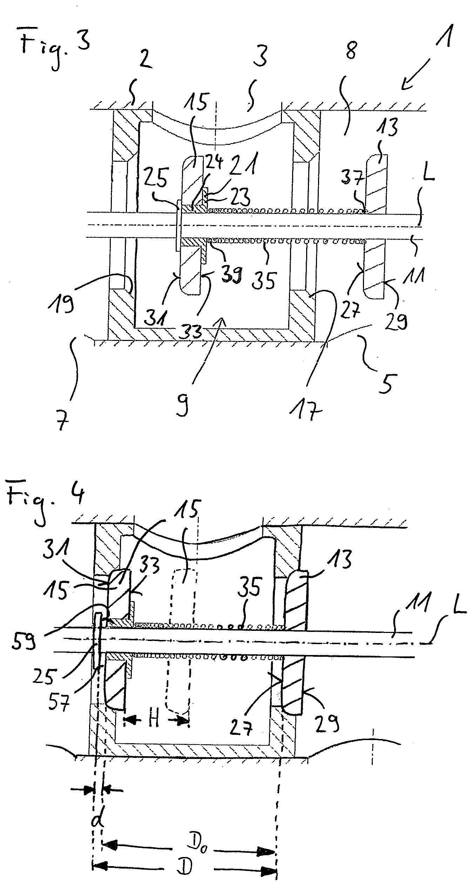

As can be seen in more detail in figures 3 and 4, the second valve body 15 is arranged on a bushing 21, which has a sleeve part 24 arranged in a central opening of the second valve body 15 and a collar 23.

The first valve body 13 has a first side 27 facing towards the first valve seat 17 and a second side 29 facing away from the first valve seat 17. The second valve body 15 has a first side 31 facing towards the second valve seat 19 and a second side 33 facing away from the second valve seat 19. The first side 27 of the first valve body 13 faces towards the second side 33 of the second valve body 15.
The bushing 21 is press-fitted into a central opening of the second valve body 15. The collar 23, which extends radially away from the shaft 11, is pressed against the second side 33 of the second valve body 15. The bushing 21 is formed of a material which is able to glide on the shaft 11 with low friction.

Between the first valve body 13 and the second valve body 15, there is a coil spring 35 arranged coaxially around the shaft 11.

A first end 37 of the spring 35 is supported by the first side 27 of the first valve body 13. A second end 39 of the spring 35 is supported by the collar 23 of the bushing 21. The spring 35 is preloaded to exert a force on the second valve body 15 to bias the second valve body 15 away from the first valve body 13 towards a retainer 25, which is fixed to the shaft 11 on the second side 31 of the second valve body 15. The retainer 25 may be formed as a separate part and fixedly connected to the shaft 11. Alternatively, the retainer 25 may be an integral part of the shaft 11.

As can be seen from figure 1, in a closed position of the valve 1, the first valve body 13 is pressed against the first valve seat 17 and the second valve body 15 is pressed against the second valve seat 19. Hence, gas can enter the cavity 8 from the gas inlet 3 as indicated by the arrows 49, but it cannot enter into the first gas outlet pipe 43 and the second outlet pipe 45.

In an open position of the valve 1, the first valve body 13 is lifted from the first valve seat 17 and the second valve body 15 is lifted of the second valve seat 19, unblocking gas flow through the cavity 8 from the gas inlet 3 to the gas outlets 5, 7. The gas flow is indicated by arrows 50.

As can be seen in figure 4, a distance D between the first valve body 13 and the retainer 25 is larger than the distance D₀ between the first valve body 13 and the second valve body 15 in a fully closed position of the valve 1. Hence, there is a gap 57 arranged between the retainer 25 and the first side 31 of the second valve body 15 in the fully closed position of the valve 1.

When the valve 1 opens, the shaft 11 is moved towards the right-hand side in the figures and the first valve body 13 is lifted immediately from the first valve seat 17, unblocking communication between the gas inlet 3 and the first gas outlet 5. At this time, the communication between the gas inlet 3 and the second gas outlet 7 is still blocked, because the second valve body 15 is not fixed to the shaft 11 and therefore is not lifted off the second valve seat 19 immediately. Upon movement of the shaft 11, the retainer 25, being fixedly connected to the shaft 11, moves towards the second valve body 15. After having travels the gap 57 with the width d, the retainer 25 comes into contact with the first side 31 of the second valve body 15. Further movement of the shaft 11 leads to the displacement of the second valve body 15 away from the second valve seat 19 by way of the retainer 25. Thus, communication between the gas inlet 3 and the second gas outlet 7 is unblocked, too.

In a full stroke of the valve 1, the second valve body 15 travels the distance H and the first valve body 13 travels the distance H + d.

When the valve 1 closes, the shaft 11 moves to the left-hand side in the figures and takes the first valve body 13 with it. Since the spring 35 presses the second valve body 15 towards the first side 59 of the retainer 25, the second valve body 15 travels with the shaft 11. After the shaft 11 has travelled the distance H, the second valve body 15 comes into contact with the second valve seat 19. At this time, the first valve body 13 is not yet in contact with the first valve seat 17. The first valve body 13 comes into contact with the first valve seat 17 after the shaft 11 has travelled the distance H + d. After the second valve body 15 has come into contact with the second valve seat 19 and thus does not move further to the left, the gap 57 starts to open again, when the shaft 11 travels further.

Because only the first valve body 13 is fixed to the shaft 11, the distance between the first valve body 13 and the second valve body 15 is not fixed. Therefore, it can be adjusted to a distance between the first valve seat 17 and the second valve seat 19, when the valve 1 closes. As a consequence, the valve 1 does not need to be manufactured with tight tolerances and can be assembled easily.

## Claims

1. System for the recirculation of exhaust gas in a vehicle, comprising
- at least one inlet pipe (41), at least one first outlet pipe (43) and one second outlet pipe (45), wherein the first outlet pipe (43) or the second outlet pipe (45) is part of an exhaust gas cooling system, while the other outlet pipe (43, 45) bypasses the exhaust gas cooling system;
- a valve (1) for controlling gas flow, the valve being adapted for blocking or unblocking gas flow from the inlet pipe (41) to the first and/or the second outlet pipe (43, 45), wherein the valve comprises
- at least one gas inlet (3) in communication with the inlet pipe (41);
- at least one first gas outlet (5) in communication with the first outlet pipe (43) and one second gas outlet (7) in communication with the second outlet pipe (45) ;
- a valve device (9) adapted for blocking or unblocking the first gas outlet (5) and/or the second gas outlet (7);
the valve device (9) comprising
- an axially movable shaft (11);
- a first valve body (13) adapted for blocking or unblocking the first gas outlet (5) by interacting with a first valve seat (17) of the first gas outlet (5), the first valve body (13) being fixedly coupled to the shaft (11) ;
- a second valve body (15) adapted for blocking or unblocking the second gas outlet (7) by interacting with a second valve seat (19) of the second gas outlet (7), the second valve body (15) being slidingly arranged on the shaft (11),
wherein the second valve body (15) has a first side (31) facing towards the second valve seat (19) and a second side (33) facing towards the first valve body (13), wherein a retainer (25) is fixed to the shaft (11) on the first side (31) of the second valve body (15) to limit a sliding movement of the second valve body (15), wherein a spring (35) is arranged between the first valve body (13) and the second valve body (15), the spring (35) being adapted to exert a force on the second side (33) of the second valve body (15) to press the second valve body (15) towards the retainer (25), when the first valve body (13) is moved axially towards the second valve body (15),
wherein a first end (37) of the spring (35) is supported by the first valve body (13) and a second end (39) of the spring (35) is supported by a collar (23), the collar (23) being slidingly arranged on the shaft (11), wherein the collar (23) forms a part of a bushing (21), wherein the second valve body (15) is arranged on a sleeve part (24) of the bushing (21).

2. System according to claim 1,
wherein a distance D between the retainer (25) and the first valve body (13) is larger than a distance D₀ between the first valve body (13) and the second valve body (15) in a closed position of the valve (1).

3. System according to claim 1 or 2,
wherein the first valve body (13) and the second valve body (15) are poppets.

4. System according to any of claims 1 to 3,
wherein different materials are used for the bushing and the second valve body.

## Patentansprüche

1. System zur Abgasrückführung in einem Fahrzeug, das Folgendes umfasst
- zumindest ein Einlassrohr (41), zumindest ein erstes Auslassrohr (43) und ein zweites Auslassrohr (45),
wobei das erste Auslassrohr (43) oder das zweite Auslassrohr (45) Teil eines Abgaskühlsystems ist,
während das andere Auslassrohr (43, 45) das Abgaskühlsystem umgeht;
- ein Ventil (1) zum Steuern von Gasströmung, wobei das Ventil dazu angepasst ist, Gasströmung vom Einlassrohr (41) zum ersten und/oder zum zweiten Auslassrohr (43, 45) zu blockieren oder freizugeben, wobei das Ventil Folgendes umfasst:
- zumindest einen Gaseinlass (3) in Verbindung mit dem Einlassrohr (41);
- zumindest einen ersten Gasauslass (5) in Verbindung mit dem ersten Auslassrohr (43) und einen zweiten Gasauslass (7) in Verbindung mit dem zweiten Auslassrohr (45);
- eine Ventilvorrichtung (9), angepasst zum Blockieren oder Freigeben des ersten Gasauslasses (5) und/oder des zweiten Gasauslasses (7);
wobei die Ventilvorrichtung (9) Folgendes umfasst:
- eine axial bewegbare Welle (11);
- einen ersten Ventilkörper (13), angepasst zum Blockieren oder Freigeben des ersten Gasauslasses (5) durch Wechselwirken mit einem ersten Ventilsitz (17) des ersten Gasauslasses (5), wobei der erste Ventilkörper (13) fest mit der Welle (11) gekoppelt ist;
- einen zweiten Ventilkörper (15), angepasst zum Blockieren oder Freigeben des zweiten Gasauslasses (7) durch Wechselwirken mit einem zweiten Ventilsitz (19) des zweiten Gasauslasses (7), wobei der zweite Ventilkörper (15) gleitbar an der Welle (11) angeordnet ist,
wobei der zweite Ventilkörper (15) eine erste Seite (31), die zum zweiten Ventilsitz (19) zeigt, und eine zweite Seite (33), die zum ersten Ventilkörper (13) zeigt, aufweist,
wobei ein Halter (25) an der Welle (11) auf der ersten Seite (31) des zweiten Ventilkörpers (15) befestigt ist, um eine gleitende Bewegung des zweiten Ventilkörpers (15) zu begrenzen,
wobei eine Feder (35) zwischen dem ersten Ventilkörper (13) und dem zweiten Ventilkörper (15) angeordnet ist, wobei die Feder (35) dazu angepasst ist, eine Kraft auf die zweite Seite (33) des zweiten Ventilkörpers (15) auszuüben, um den zweiten Ventilkörpers (15) in Richtung des Halters (25) zu drücken, wenn der erste Ventilkörper (13) axial in Richtung des zweiten Ventilkörpers (15) bewegt wird,
wobei ein erstes Ende (37) der Feder (35) durch den ersten Ventilkörper (13) unterstützt wird und ein zweites Ende (39) der Feder (35) durch einen Kragen (23) unterstützt wird, wobei der Kragen (23) gleitbar an der Welle (11) angeordnet ist, wobei der Kragen (23) einen Teil einer Buchse (21) bildet, wobei der zweite Ventilkörper (15) an einem Hülsenteil (24) der Buchse (21) angeordnet ist.

2. System nach Anspruch 1,
wobei ein Abstand D zwischen dem Halter (25) und dem ersten Ventilkörper (13) größer als ein Abstand D₀ zwischen dem ersten Ventilkörper (13) und dem zweiten Ventilkörper (15) in einer geschlossenen Position des Ventils (1) ist.

3. System nach Anspruch 1 oder 2,
wobei der erste Ventilkörper (13) und der zweite Ventilkörper (15) Ventilkegel sind.

4. System nach einem der Ansprüche 1 bis 3,
wobei unterschiedliche Materialien für die Buchse und den zweiten Ventilkörper verwendet werden.

## Revendications

1. Système de recirculation des gaz d'échappement dans un véhicule, comprenant
- au moins un tuyau d'arrivée (41), au moins un premier tuyau de sortie (43) et un deuxième tuyau de sortie (45),
le premier tuyau de sortie (43) ou le deuxième tuyau de sortie (45) faisant partie d'un système de refroidissement des gaz d'échappement, l'autre tuyau de sortie (43, 45) contournant quant à lui le système de refroidissement des gaz d'échappement ;
- une vanne (1) destinée à réguler l'écoulement des gaz, la vanne étant adaptée à bloquer ou débloquer l'écoulement des gaz du tuyau d'arrivée (41) au premier et/ou au deuxième tuyau de sortie (43, 45), la vanne comprenant
- au moins une arrivée des gaz (3) en communication avec le tuyau d'arrivée (41) ;
- au moins une première sortie des gaz (5) en communication avec le premier tuyau de sortie (43) et une deuxième sortie des gaz (7) en communication avec le deuxième tuyau de sortie (45) ;
- un dispositif formant vanne (9) adapté à bloquer ou débloquer la première sortie des gaz (5) et/ou la deuxième sortie des gaz (7) ;
le dispositif formant vanne (9) comprenant
- une tige mobile axialement (11) ;
- un premier corps de vanne (13) adapté à bloquer ou débloquer la première sortie des gaz (5) en interagissant avec un premier siège de vanne (17) de la première sortie des gaz (5), le premier corps de vanne (13) étant accouplé à demeure à la tige (11) ;
- un deuxième corps de vanne (15) adapté à bloquer ou débloquer la deuxième sortie des gaz (7) en interagissant avec un deuxième siège de vanne (19) de la deuxième sortie des gaz (7), le deuxième corps de vanne (15) étant agencé coulissant sur la tige (11),
le deuxième corps de vanne (15) présentant un premier côté (31) tourné vers le deuxième siège de vanne (19) et un deuxième côté (33) tourné vers le premier corps de vanne (13), une pièce de retenue (25) étant fixée à la tige (11) du premier côté (31) du deuxième corps de vanne (15) dans le but de limiter un mouvement coulissant du deuxième corps de vanne (15),
un ressort (35) étant agencé entre le premier corps de vanne (13) et le deuxième corps de vanne (15), le ressort (35) étant adapté à exercer une force du deuxième côté (33) du deuxième corps de vanne (15) dans le but de pousser le deuxième corps de vanne (15) vers la pièce de retenue (25) lorsque le premier corps de vanne (13) est déplacé axialement vers le deuxième corps de vanne (15),
une première extrémité (37) du ressort (35) prenant appui contre le premier corps de vanne (13) et une deuxième extrémité (39) du ressort (35) prenant appui contre une collerette (23), la collerette (23) étant agencée coulissante sur la tige (11),
la collerette (23) faisant partie d'un coussinet (21),
le deuxième corps de vanne (15) étant agencé sur une partie manchon (24) du coussinet (21).

2. Système selon la revendication 1,
dans lequel une distance D entre la pièce de retenue (25) et le premier corps de vanne (13) est supérieure à une distance D₀ entre le premier corps de vanne (13) et le deuxième corps de vanne (15) dans une position fermée de la vanne (1).

3. Système selon la revendication 1 ou 2,
dans lequel le premier corps de vanne (13) et le deuxième corps de vanne (15) sont des champignons.

4. Système selon l'une quelconque des revendications 1 à 3,
dans lequel des matériaux différents sont utilisés pour le coussinet et le deuxième corps de vanne.
